# EUROPÄISCHE PATENTSCHRIFT

(11) **EP 0 696 021 B1**
(45) Veröffentlichungstag und Bekanntmachung des Hinweises auf die Patenterteilung: **14.11.2001**
(21) Anmeldenummer: 95111920.5
(22) Anmeldetag: 28.07.1995
(51) Int. Cl.: G07F 7/08, G06F 17/60

(54) **Verfahren zur Bestimmung des aktuellen Geldbetrags in einem Datenträger und System zur Durchführung des Verfahrens**
Method to determine the actual money amount in a data carrier and system to implement this method
Méthode pour déterminer la valeur monétaire actuelle dans un support de données et système pour la mise en oeuvre de cette méthode

(30) Priorität: 29.07.1994 DE 4427039
(43) Veröffentlichungstag der Anmeldung: 07.02.1996
(73) Patentinhaber: Giesecke & Devrient GmbH, 81677 München (DE)
(72) Erfinder: Weiss, Dieter, D-88145 Hergatz (DE)
(74) Vertreter: Klunker . Schmitt-Nilson . Hirsch

(56) Entgegenhaltungen:
- EP-A- 0 172 670
- EP-A- 0 416 916
- EP-A- 0 542 298
- EP-A- 0 588 339
- PATENT ABSTRACTS OF JAPAN vol. 014, no. 313 (P-1072), 5. Juli 1990 & JP 02 100195 A (FUJI ELECTRIC CO LTD), 12. April 1990

## Beschreibung

Die Erfindung betrifft ein Verfahren zur Bestimmung des aktuellen Geldbetrages in einem einem Benutzer zugeordneten Datenträger, der in einem System zur Durchführung bargeldloser Transaktionen verwendet wird. Die Erfindung betrifft ferner ein System zur Durchführung des Verfahrens.

In der Vergangenheit sind bereits Systeme bekannt geworden, in denen mit einer benutzerspezifischen IC-Karte bargeldlose Transaktionen getätigt werden können. Dazu ist in der IC-Karte ein vorbezahlter Geldbetrag gespeichert, mit dem das Konto des Karteninhabers beim Laden des Betrages in die Karte belastet wird. Zusätzlich wird dieser Betrag in einem Geldspeicher der Zentrale abgelegt. Bei einer Transaktion wird der Transaktionsbetrag von der IC-Karte abgebucht und an ein Transaktionsterminal übermittelt, wo er gespeichert wird. In gewissen Zeitabständen wird der im Transaktionsterminal aufgelaufene Betrag vom Geldspeicher der Zentrale abgebucht und dem Konto des Terminalinhabers gutgeschrieben. Daraufhin wird der Betrag im Terminal gelöscht. Dieser Vorgang wird allgemein als "Clearing" bezeichnet.

In den obengenannten Systemen werden die Transaktionen mit den IC-Karten bevorzugt anonym durchgeführt, d. h. die von der IC-Karte an das Transaktionsterminal übermittelten Transaktionsdaten enthalten keinerlei Daten, die Rückschlüsse auf die Identität des Karteninhabers zulassen. Somit hat die elektronische Transaktion den Charakter einer Bargeld-Transaktion.

Die anonym durchgeführten Transaktionen haben jedoch zur Folge, daß bei Ausfall der IC-Karte eines Karteninhabers, z. B. durch eine Funktionsstörung oder bei Verlust der Karte, der aktuelle Geldbetrag, also derjenige Betrag, der nach der letzten Transaktion noch in der Karte als Guthaben verbleibt, nicht exakt festgestellt werden kann, da, bezogen auf einen Benutzer, nicht zu rekonstruieren ist, wieviel Geld ausgegeben worden ist. Eine solche Bestimmung des aktuellen Geldbetrages ist jedoch wünschenswert, da ansonsten einem Karteninhaber unverschuldet große Geldbeträge verlorengehen können. Aus dem Stand der Technik sind bereits Transaktionssysteme bekannt, bei denen eine Bestimmung des aktuellen Geldbetrages erfolgt.

Dies erfolgt beispielsweise bei dem aus der EP 0 416 916 A2 bekannten System, das aus einer Zentrale, mehreren Transaktionsterminals und einer IC-Karte besteht, dadurch, daß in einer in der Zentrale eigens dafür angelegten Datei geprüft wird, welcher Geldbetrag zuletzt in die Karte geladen wurde. Dies ist der Geldbetrag, der maximal an den Karteninhaber erstattet wird. Anhand statistischer Betrachtungen wird, ausgehend von diesem Betrag, der aktuelle Geldbetrag im Geldspeicher zum Zeitpunkt des Funktionsausfalls der Karte abgeschätzt und an den Kunden aus dem Geldspeicher der Zentrale, in dem die geladenen Beträge abgelegt sind, ausgezahlt. Beansprucht der Kunde einen größeren Betrag, so wird die Differenz von einem gesonderten Konto in der Zentrale gezahlt. Es ist vorgesehen, die hierbei entstehenden Verluste durch eine Versicherung abzudecken. Bei diesem bekannten System können zwar die Transaktionen mit der IC-Karte anonym durchgeführt werden, jedoch führt die Berechnung des aktuellen Geldbetrages in der IC-Karte zu keinem genauen Ergebnis, so daß eine Auszahlung entweder zu Lasten des Kunden oder der Bank geht.

Aus der EP 0 172 670 A2 ist hingegen ein System, bestehend aus einer Vielzahl benutzerspezifischer IC-Karten und einer Zentrale bekannt, in dem bei einer Transaktion zwischen zwei Karten neben dem Transaktionsbetrag die Identitäten der Transaktionsteilnehmer ausgetauscht werden. Diese Daten werden in Form von Transaktionsprotokollen in beiden Karten gespeichert. Beim Clearing zwischen einer Karte und der Zentrale werden sämtliche in der Karte gespeicherten Transaktionsprotokolle an die Zentrale übermittelt, dort gespeichert und in der Karte gelöscht. Bei Funktionsausfall bzw. Verlust etc. einer Karte werden in der Zentrale anhand der Identitätsdaten des Karteninhabers aus allen Transaktionsprotokollen diejenigen bestimmt, die mit der zu prüfenden Karte durchgeführt wurden. Anhand dieser kann aus dem ursprünglich in die Karte geladenen Geldbetrag der aktuelle Geldbetrag exakt bestimmt und an den Karteninhaber ausgezahlt werden. Eine falsche Auszahlung zu Lasten der Kunden oder der Bank kann also weitestgehend ausgeschlossen werden.

EP-A-0542298 offenbart ein Veflahren und ein System zur Bestimmung des aktuellen Geldbetrages in einer verlorenen Chipkarte, wobei die von der Chipkarte durchgeführten Transaktionen regelmäßig an einer Zentrale übermittelt werden. EP-A-0588339 offenbart ein Verfahren und ein System, wobei eine Chipkarte bei jeder Transaktion den bezahlten Betrag unterschreibt und den Betrag mit den Unterschrift an einer Zentrale zur Speicherung übermittelt.

Die obigen Ausführungen zeigen, daß bei den bekannten Systemen entweder die Forderung nach anonymen Transaktionen oder nach der Bestimmung des aktuellen Geldbetrages in einer Karte erfüllt werden kann. Keine der bekannten Systeme kann jedoch beide Forderungen gleichzeitig erfüllen.

Es ist deshalb Aufgabe der Erfindung, ein Verfahren und ein System vorzuschlagen, bei dem die Feststellung des aktuellen Geldbetrages eines Datenträgers unter weitestgehender Erhaltung der Anonymität der Transaktionen im System möglich ist.

Die Aufgabe wird durch die kennzeichnenden Merkmale der unabhängigen Ansprüche 1 und 6 gelöst.

Der Grundgedanke der Erfindung ist darin zu sehen, daß man eine der Zentrale übergeordnete vertrauenswürdige Instanz einführt, die einzig und allein anhand von Transaktionszertifikaten dazu in der Lage ist, bestimmte Transaktionen einem bestimmten Karteninhaber zuzuordnen und somit den aktuellen Geldbetrag in der Karte zu berechnen. Die Zertifikate werden zuvor bei einer Transaktion mit einem in der Karte gespeicherten kartenindividuellen Schlüssel aus den Transaktionsdaten berechnet und zusammen mit diesen an die vertrauenswürdige Instanz übermittelt und dort gespeichert.

Die Vorteile der Erfindung sind insbesondere darin zu sehen, daß eine exakte Berechnung des aktuellen Geldbetrages in der Karte und damit eine exakte Rückerstattung des Betrags bei Bedarf möglich ist. Gleichzeitig bleibt die Anonymität der Transaktionen weitestgehend bewahrt, da die Transaktionsdaten keine Identitätsdaten des Karteninhabers enthalten und eine Zuordnung von Transaktionen zu einem Kartenbenutzer nur der vertrauenswürdigen Instanz durch Neuberechnung der Zertifikate und Vergleich mit den übermittelten Zertifikaten möglich ist.

In einem ersten Ausführungsbeispiel der Erfindung sind in der vertrauenswürdigen Instanz in einem Schlüsselspeicher sämtliche kartenindividuellen Schlüssel in Verbindung mit der Karteninhaberidentität, in einem Transaktionsspeicher alle Transaktionsdaten mit dazugehörigen Zertifikaten und in einem Betragsspeicher die in die IC-Karten geladenen Beträge bei Ausgabe bzw. Neuladung aller Karten gespeichert. Bei der Berechnung des aktuellen Geldbetrages einer bestimmten Karte werden mit dem kartenindividuellen Schlüssel des Karteninhabers aus allen Transaktionsdaten die Transaktionszertifikate berechnet und diejenigen herausgesucht, bei denen das berechnete Zertifikat mit dem gespeicherten übereinstimmt. Genau diese Transaktionen sind von dem Karteninhaber durchgeführt worden und werden zur Bestimmung des aktuellen Geldbetrages mit dem ursprünglich in die Karte geladenen Betrag verrechnet.

Gemäß einer Weiterbildung der Erfindung kann zur Verkürzung der Berechnungsdauer des aktuellen Geldbetrages in jeden Transaktionsdatensatz der aktuelle Geldbetrag nach der letzten Transaktion aufgenommen und das Zertifikat entsprechend gebildet werden. Bei der Berechnung des aktuellen Geldbetrages einer bestimmten Karte braucht dann, ausgehend von dem jüngsten in der Instanz gespeicherten Transaktionsdatensatz, lediglich der Transaktionsdatensatz herausgesucht werden, bei dem das neuberechnete Zertifikat mit dem gespeicherten übereinstimmt, da diesem Datensatz bereits der aktuelle Geldbetrag zu entnehmen ist. Zusätzlich zur Verkürzung der Berechnungsdauer erwächst hier der Vorteil, daß auf den Betragsspeicher in der vertrauenswürdigen Instanz gänzlich verzichtet werden kann, da der geladene Betrag der IC-Karte zur Berechnung des aktuellen Betrages nicht benötigt wird.

Im Zusammmenhang mit den nachstehenden Figuren werden Ausführungsbeispiele und weitere Vorteile der Erfindung näher erläutert. Darin zeigt:
- Fig. 1: ein Organigramm des Systems,
- Fig. 2: die übergeordnete Instanz,
- Fig. 3: ein erstes Flußdiagramm zur Überprüfung von Transaktionen in der übergeordneten Instanz,
- Fig. 4: ein zweites Flußdiagramm zur Überprüfung von Transaktionen in der übergeordneten Instanz.

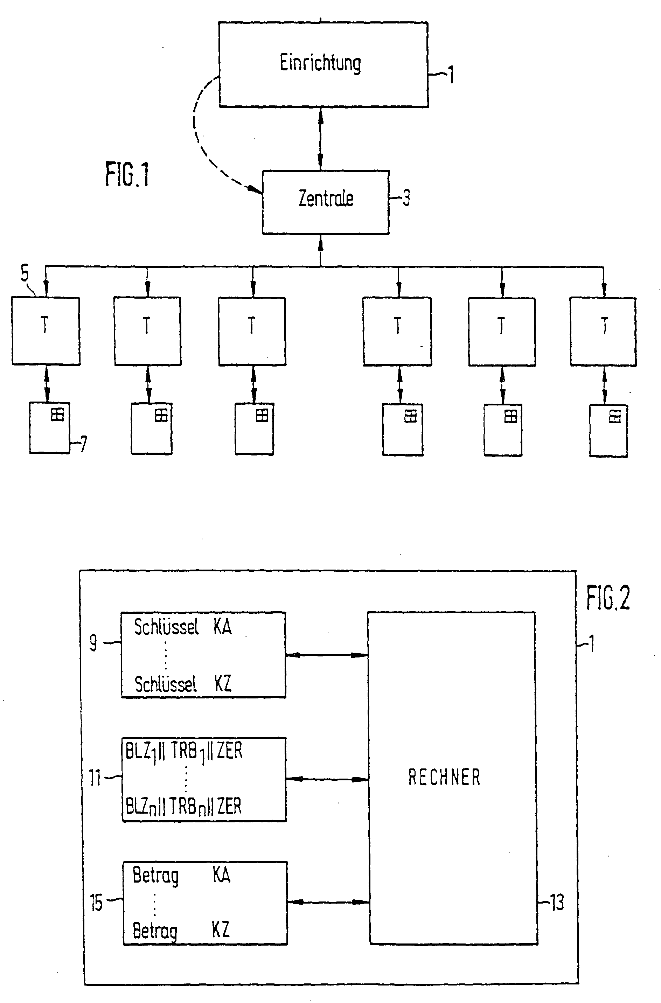

Fig. 1 zeigt ein Organigramm des Systems, bestehend aus einer Einrichtung 1, einer Zentrale 3, einer Vielzahl von Transaktionsterminals 5 und einer Vielzahl benutzerspezifischer IC-Karten 7. Die Einrichtung 1 wird im folgenden als "übergeordnete Instanz" bezeichnet. Die übergeordnete Instanz 1 ist in der Fig. 1 beispielhaft als eigenständige Instanz aufgeführt, es ist aber auch möglich, diese in die Zentrale zu integrieren. Wie durch die Pfeile angedeutet, kann sowohl zwischen der Instanz 1 und der Zentrale 3 als auch zwischen der Zentrale 3 und den Terminals 5 im Bedarfsfall ein Datenaustausch stattfinden, eine ständige On-line-Verbindung zwischen den Komponenten ist ebenfalls möglich. Bei einer Transaktion führt der Kartenbenutzer seine IC-Karte 7 in ein Terminal 5 ein. In der IC-Karte 7 wird mit einem benutzerspezifischen Schlüssel, der in der Karte gespeichert ist, ein Transaktionszertifikat aus den Transaktionsdaten berechnet und zusammen mit diesen über das Terminal 5 und die Zentrale 3 an die vertrauenswürdige Instanz 1 übermittelt, wo es gespeichert wird.

Wie die Transaktion im System darüber hinaus durchgeführt wird, soll an dieser Stelle nicht weiter erläutert werden. Für genauere Ausführungen sei jedoch auf die EP 0 416 916 A2 verwiesen, in der bargeldlose anonyme Transaktionen in einem System der obengenannten Art in aller Ausführlichkeit beschrieben sind.

Es ist wichtig festzustellen, daß in den Transaktionsdaten keinerlei Daten enthalten sind, die auf die Identität des Karteninhabers Rückschlüsse zulassen. Die Transaktionen werden also anonym, genau wie mit Bargeld ausgeführt. Eine Zuordnung der Transaktionsdaten zu einer bestimmten Person ist im Bedarfsfall ausschließlich der übergeordneten Instanz 1 möglich.

Wie die Zuordnung im einzelnen geschieht wird im Zusammenhang mit den nachfolgenden Figuren erläutert.

Fig. 2 zeigt den Aufbau der übergeordneten Instanz 1, die über einen Schlüsselspeicher 9, einen Transaktionsdatenspeicher 11, einen Rechner 13 und gegebenenfalls über einen Betragsspeicher 15 verfügt.

In dem Schlüsselspeicher 9 sind alle benutzerspezifischen Schlüssel in Verbindung mit der Identität der Karteninhaber, die am System teilnehmen, gespeichert. Alternativ dazu ist es auch möglich, in dem Speicher 9 lediglich Daten bezüglich der Identität der Karteninhaber zu speichern, aus denen dann mit Hilfe eines der Instanz zugeordneten Masterschlüssels im Bedarfsfall der jeweilige benutzerspezifische Schlüssel generiert werden kann. Der Masterschlüssel ist ebenfalls in der übergeordneten Instanz 1 gespeichert. Durch dieses Vorgehen kann der Speicherbedarf im Speicher 9 erheblich reduziert werden.

In dem Transaktionsdatenspeicher 11 sind alle Transaktionsdaten zusammen mit den Zertifikaten gespeichert, die während einer Transaktion, wie in Zusammenhang mit Fig. 1 beschrieben, an die übergeordnete Instanz übermittelt werden. Die Anzahl der im Transaktionsspeicher 11 gespeicherten Transaktionen und Zertifikate kann begrenzt werden, z. B. dadurch, daß man an alle Karteninhaber zu einem bestimmten Zeitpunkt neue Datenträger ausgibt bzw. die alten Datenträger neu lädt. Die alten Datenträger werden dann ungültig und die Notwendigkeit einer Bestimmung des aktuellen Geldbetrages in einem dieser Datenträger kann ausgeschlossen werden. Somit können alle Datensätze, die vor dem erwähnten Zeitpunkt liegen, aus dem Transaktionsspeicher gelöscht werden.

Ferner sind für alle Karteninhaber in dem gegebenenfalls vorhandenen Betragsspeicher 15 die bei einem Ladevorgang in die Karte gespeicherten Geldbeträge abgelegt. Es wird an späterer Stelle ausgeführt, wann dieser Speicher 15 benötigt wird.

Der Rechner 13 hat auf alle vorhandenen Speicher 9, 11 und 15 Zugriff und entnimmt den Speichern die notwendigen Daten, mit denen der aktuelle Geldbetrag einer nicht zugänglichen (z. B. funktionsgestörten oder verlorengegangenen) IC-Karte eines Karteninhabers berechnet werden kann.

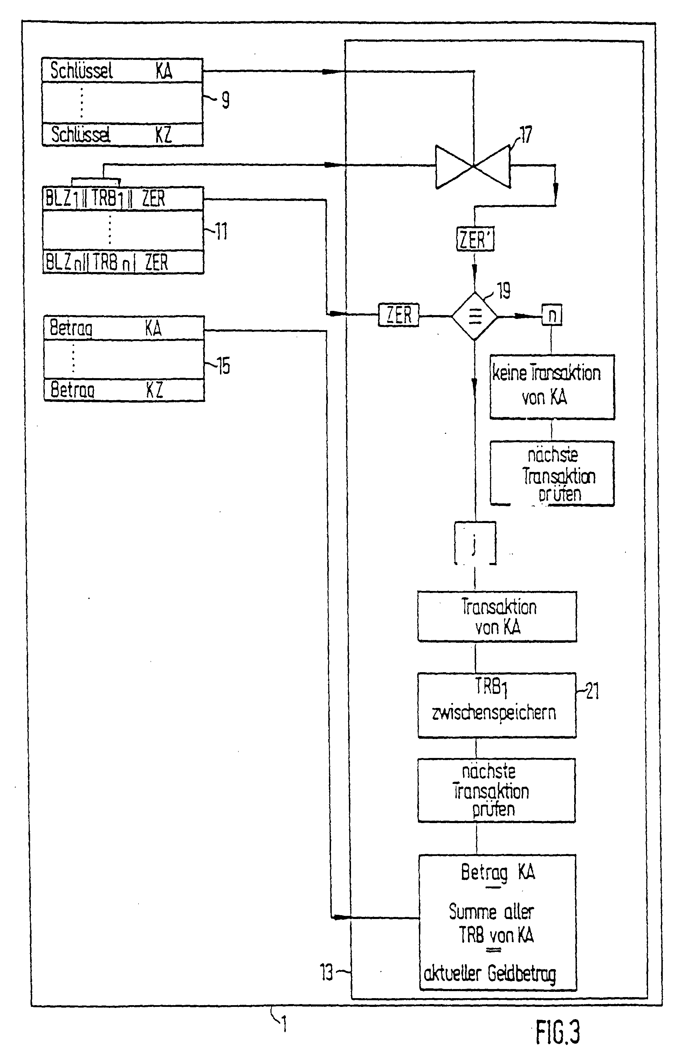

Fig. 3 zeigt schematisch, wie in der übergeordneten Instanz 1 der aktuelle Geldbetrag einer IC-Karte gemäß einem ersten Ausführungsbeispiel der Erfindung berechnet wird. Zunächst wird aus dem Schlüsselspeicher 9 der benutzerspezifische Schlüssel des Karteninhabers ausgelesen, dessen aktueller Geldbetrag berechnet werden soll. Mit diesem Schlüssel wird in einem Verschlüsselungsbaustein 17 aus den Transaktionsdaten, die aus dem Transaktionsspeicher 11 ausgelesen werden, ein Zertifikat berechnet, das in der Fig. 3 mit ZER' bezeichnet ist. Der Verschlüsselungsbaustein 17 weist einen zu den IC-Karten der Kunden identischen Algorithmus, beispielsweise den DES-Algorithmus auf.

Das neu berechnete Zertifikat ZER' wird mit dem gespeicherten Zertifikat ZER in einem Komperator 19 auf Übereinstimmung geprüft. Eine Gleichheit zwischen den Zertifikaten ergibt sich nur dann, wenn die beiden Zertifikate mit demselben Schlüssel erstellt sind, also dann, wenn die Transaktion von dem Karteninhaber durchgeführt worden ist. In diesem Fall wird der Transaktionsbetrag TRB im Speicher 21 zwischengespeichert und die nächste Transaktion aus dem Speicher 11 überprüft. Das Verfahren wird so lange wiederholt, bis aus allen im Transaktionsspeicher 11 gespeicherten Transaktionen diejenigen herausgesucht sind, die von dem überprüften Karteninhaber durchgeführt worden sind.

Die Summe sämtlicher Transaktionsbeträge wird schließlich von dem in die IC-Karte des Karteninhabers geladenen Betrag, der aus dem Betragsspeicher 15 ausgelesen wird, abgezogen, so daß sich der genaue aktuelle Geldbetrag der Karte ergibt.

In der übergeordneten Instanz ist also die Feststellung des exakten aktuellen Geldbetrages der IC-Karte möglich, ohne daß in den Transaktionsdaten Informationen vorhanden sind, die direkt Rückschlüsse auf die Identität des Karteninhabers zulassen. Die Transaktionen bleiben also weitestgehend anonym, eine Zuordnung dieser zu einer Person kann ausschließlich durch die vertrauenswürdige Instanz durchgeführt werden, da nur dieser der benutzerspezifische Schlüssel zugänglich ist. So wird zwar bei jeder Transaktion aus den Transaktionsdaten mit einem benutzerspezifischen Schlüssel ein Zertifikat erzeugt, das Zertifikat ist jedoch für jede Transaktion unterschiedlich, da die Transaktionsdaten auch immer unterschiedlich sind. Dadurch ist es einer nichtautorisierten Instanz nicht möglich, anhand der Zertifikate die im System getätigten Transaktionen einem bestimmten Karteninhaber zuzuordnen, da von einem Karteninhaber bei jeder Transaktion unterschiedliche Zertifikate erzeugt werden.

Die obigen Ausführungen zeigen, daß die Berechnung des aktuellen Geldbetrages in der IC-Karte eines Karteninhabers relativ aufwendig ist, da alle im Transaktionsspeicher gespeicherten Transaktionen daraufhin überprüft werden müssen, ob sie von einem bestimmten Karteninhaber durchgeführt worden sind. Gemäß einer Weiterbildung der Erfindung werden deshalb in die Transaktionsdatensätze, die an die vertrauenswürdige Instanz übermittelt werden, zusätzlich Daten einbezogen, die eine Reduzierung der zu untersuchenden Transaktionsdatensätze ermöglichen.

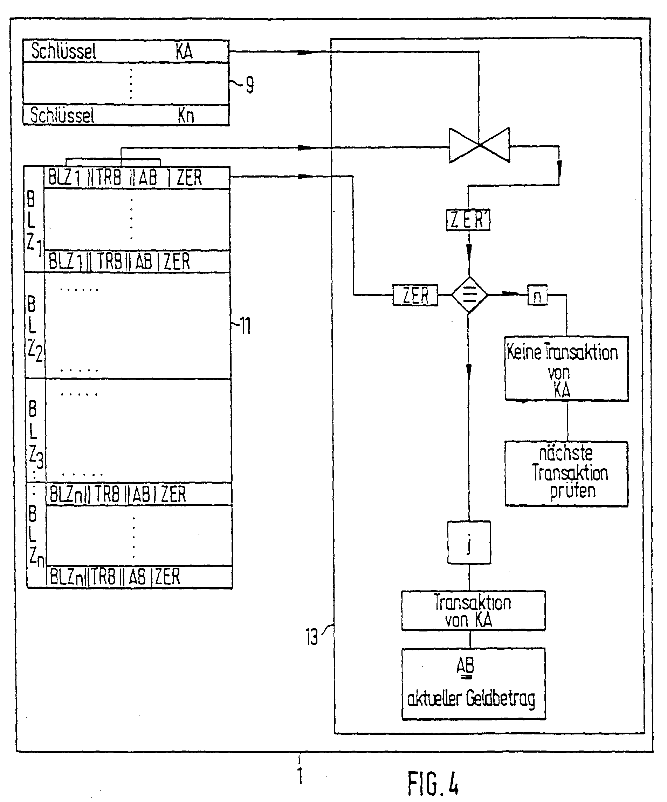

Fig. 4 zeigt schematisch, wie in der übergeordneten Instanz 1 der aktuelle Geldbetrag einer IC-Karte gemäß einer Weiterbildung der Erfindung berechnet werden kann. Grundsätzlich wird das Verfahren zur Berechnung des aktuellen Geldbetrages in einer Karte genau so durchgeführt, wie es in Verbindung mit Fig. 3 beschrieben wurde, d. h. es basiert auf dem Vergleich des neu berechneten Zertifikats ZER' mit dem gespeicherten Zertifikat ZER und der Zuordnung der Transaktion zu einer bestimmten Person bei Gleichheit der Zertifikate.

Die Anzahl der Transaktionen, deren Zertifikate überprüft werden müssen, wird jedoch durch Aufnahme des aktuellen Geldbetrages AB in den Transaktionsdatensatz reduziert. Ausgehend von dem jüngsten, im Speicher 11 gespeicherten Transaktionsbetrag braucht dann lediglich der Datensatz herausgesucht werden, bei dem das neu berechnete Zertifikat ZER' mit dem gespeicherten Zertifikat ZER übereinstimmt. Diesem Datensatz kann der aktuelle Betrag AB, der dem Karteninhaber auszuzahlen ist, direkt entnommen werden. Der ursprünglich in die Karte geladene Betrag wird zur Berechnung des aktuellen Betrages nicht benötigt, so daß in der vertrauenswürdigen Instanz 1 auf den Betragsspeicher 15 gänzlich verzichtet werden kann.

Eine Aufnahme weiterer Daten in den Transaktionsdatensatz zur Reduzierung der zu überprüfenden Transaktionen ist selbstverständlich möglich. So kann beispielsweise die Bankleitzahl BLZ der Bank, bei der der Karteninhaber sein Konto führt, in den Transaktionsdatensatz aufgenommen werden. Die Transaktionsdatensätze werden dann im Transaktionsdatenspeicher 11 nach Bankleitzahlen geordnet abgelegt (siehe Fig. 4) und bei der Berechnung des aktuellen Betrages einer Karte eines bestimmten Karteninhabers brauchen nur die Datensätze mit der Bankleitzahl der Bank überprüft werden, bei der der Karteninhaber sein Konto führt.

Es kann ferner beispielsweise die Transaktionszeit in den Transaktionsdatensatz aufgenommen werden, so daß die Transaktionen im Speicher 11 zusätzlich chronologisch geordnet werden können. In diesem Fall kann zusätzlich der Zeitraum, in dem die Transaktionsdatensätze überprüft werden müssen, eingeschränkt werden.

Die obige Aufzählung erhebt keinerlei Anspruch auf Vollständigkeit, vielmehr sind für einen Fachmann selbstverständlich auch noch andere, nicht genannte Möglichkeiten denkbar. Diesbezüglich ist nur wichtig, daß auch die zusätzlich in die Transaktionsdatensätze aufgenommenen Daten keine Rückschlüsse auf die Identität des Karteninhabers zulassen.

Enthält der Transaktionsdatensatz dennoch Daten, von denen Dritte keine Kenntnis erlangen sollen, wie z. B. den aktuellen Geldbetrag einer IC-Karte, so kann der Datensatz und das Zertifikat, das an die Instanz übermittelt wird, in der Karte zusätzlich mit einem der Instanz zugeordneten Schlüssel verschlüsselt werden. In diesem Fall werden von der Karte nur diejenigen Daten an das Transaktionsterminal im Klartext übermittelt, die zur Durchführung der Transaktion unbedingt notwendig sind. Die an die Instanz übermittelten Daten werden dort entschlüsselt und gespeichert.

Abschließend sei erwähnt, daß bei dem erfindungsgemäßen System auch Maßnahmen getroffen werden können, die sicherstellen, daß die Berechnung des aktuellen Geldbetrages einer IC-Karte von der vertrauenswürdigen Instanz nur im Bedarfsfall bzw. auf Wunsch des Karteninhabers durchgeführt werden kann. So ist es beispielsweise möglich, den kartenindividuellen Schlüssel gar nicht oder nur teilweise in der Instanz zu speichern und erst im Bedarfsfall zu generieren. In die Schlüsselbildung können dann Daten einfließen, die ausschließlich dem Karteninhaber bekannt sind, z. B. die Geheimzahl, mit der auch die IC-Karte vor unrechtmäßigem Gebrauch geschützt wird.

## Patentansprüche

1. Verfahren zur Bestimmung des aktuellen Geldbetrages in einem einem Benutzer zugeordneten Datenträger (7), der in einem System zur Ausführung bargeldloser Transaktionen verwendet wird, **gekennzeichnet durch** folgende Verfahrensschritte:
a) Speichern eines Transaktionsdatensatzes mit einem dazugehörigen Zertifikat, das bei einer Transaktion mit einem dem Datenträger, mit dem die Transaktion durchgeführt wurde, zugeordneten Schlüssel erzeugt wurde, für im System durchgeführte Transaktionen;
b) Berechnen eines Zertifikats aus einem gespeicherten Transaktionsdatensatz mit dem Schlüssel, der dem Datenträger zugeordnet ist, dessen aktueller Geldbetrag bestimmt werden soll;
c) Vergleichen des berechneten mit dem gespeicherten Zertifikat, wobei eine Übereinstimmung der Zertifikate anzeigt, daß die Transaktionen mit dem Datenträger durchgeführt worden ist, dessen aktueller Geldbetrag bestimmt werden soll;
d) Auswählen des Transaktionsdatensatzes, bei dem sich eine Übereinstimmung der Zertifikate ergeben hat;
e) Wiederholen der Verfahrensschritte b) bis d), bis aus den gespeicherten Transaktionsdatensätzen diejenigen ausgewählt worden sind, die eine Bestimmung des aktuellen Geldbetrages in dem Datenträger ermöglichen.

2. Verfahren zur Bestimmung des aktuellen Geldbetrages in einem einem Benutzer zugeordneten Datenträger nach. Anspruch 1, **dadurch gekennzeichnet, daß**
- die einzelnen gespeicherten Transaktionsdatensätze den Transaktionsbetrag der Transaktion enthalten;
- die Verfahrensschritte b) bis d) für alle gespeicherten Transaktionen durchgeführt werden und daß
- der aktuelle Geldbetrag durch Verrechnung der in den ausgewählten Transaktionsdatensätzen enthaltenen Transaktionsbeträge mit dem ursprünglichen, in den Datenträger geladenen Geldbetrag bestimmt wird.

3. Verfahren zur Bestimmung des aktuellen Geldbetrages in einem einem Benutzer zugeordneten Datenträger nach Anspruch 1, **dadurch gekennzeichnet, daß**
- die einzelnen gespeicherten Transaktionsdatensätze den aktuellen Geldbetrag nach der zuletzt mit einem Datenträger durchgeführten Transaktion enthalten;
- die Verfahrensschritte b) bis d), ausgehend von der zuletzt gespeicherten Transaktion so lange durchgeführt werden, bis sich eine Übereinstimmung der Zertifikate ergibt;
- der aktuelle Geldbetrag aus dem Transaktionsdatensatz bestimmt wird, bei dem sich eine Übereinstimmung der Zertifikate ergeben hat.

4. Verfahren zur Bestimmung des aktuellen Geldbetrages in einem einem Benutzer zugeordneten Datenträger, nach einem der Ansprüche 1 bis 3, **dadurch gekennzeichnet, daß**
- die gespeicherten Transaktionsdatensätze nach bestimmten Kriterien Gruppen zugeordnet werden, wobei das Kriterium in den Transaktionsdatensätzen enthalten ist und jeder Datenträger einer bestimmten Gruppe angehört und
- bei der Bestimmung des aktuellen Geldbetrages eines bestimmten Datenträgers nur Transaktionen der Gruppe überprüft werden, der der Datenträger angehört.

5. Verfahren zur Bestimmung des aktuellen Geldbetrages in einem einem Benutzer zugeordneten Datenträger nach Anspruch 4, **dadurch gekennzeichnet, daß** jeder gespeicherte Transaktionsdatensatz eine Nummer, beispielsweise eine Bankleitzahl, enthält, wobei mehrere Datenträger jeweils einer Nummer zugeordnet sind und die Transaktionsdatensätze gemäß der Nummer den Gruppen zugeordnet werden.

6. System zur Durchführung des Verfahrens nach Anspruch 1, umfassend eine Zentrale (3), wenigstens ein Terminal (5), das mit der Zentrale kommunizieren kann, und den Benutzern zugeordneten Datenträgern (7), in denen jeweils ein bestimmter Geldbetrag gespeichert ist, **dadurch gekennzeichnet, daß** eine Einrichtung (1) vorgesehen ist, mit
- einem Transaktionsspeicher (11), in dem Transaktionsdatensätze mit jeweils einem zu den Transaktionsdatensätzen gehörigen Zertifikat, das im Zuge der Transaktion mit einem benutzerspezifischen Schlüssel aus den Transaktionsdaten erstellt worden ist, gespeichert sind;
- einem Schlüsselspeicher (9), in dem Daten gespeichert sind, die die Bestimmung der benutzerspezifischen Schlüssel der Karteninhaber zulassen
- Mitteln (13) zum Berechnen der Zertifikate mit einem benutzerspezifischen Schlüssel aus dem Schlüsselspeicher, wenigstens der Transaktionen, die eine Ermittlung des aktuellen Geldbetrages des dem Schlüssel zugeordneten Datenträger ermöglichen.

7. System nach Anspruch 6, **dadurch gekennzeichnet, daß** die Einrichtung ferner einen Betragsspeicher (15), in dem die ursprünglich in den Datenträgern eingeschriebenen Geldbeträge in Verbindung mit der Benutzeridentität gespeichert sind, enthält.

8. System nach Anspruch 6, **dadurch gekennzeichnet, daß** die Einrichtung (1) Bestandteil der Zentrale (3) ist.

9. System nach Anspruch 6, **dadurch gekennzeichnet, daß** der Datenträger (7) eine IC-Karte ist, die einen Speicher zur Speicherung des kartenindividuellen Schlüssels und einen Schaltkreis zur Berechnung des Transaktionszertifikats aufweist.

## Claims

1. A method for determining the current amount of money in a data carrier (7) associated with a user that is used in a system for performing cashless transactions, **characterized by** the following method steps:
a) storing a transaction record with an associated certificate that was generated upon a transaction with a key associated with the data carrier with which the transaction was performed, for transactions performed in the system;
b) calculating a certificate from a stored transaction record with the key associated with the data carrier whose current amount of money is to be determined;
c) comparing the calculated certificate with the stored one, a match of certificates indicating that the transaction was performed with the data carrier whose current amount of money is to be determined;
d) selecting the transaction record where a match of certificates resulted;
e) repeating method steps b) to d) until those transaction records which permit determination of the current amount of money in the data carrier have been selected from the stored transaction records.

2. A method for determining the current amount of money in a data carrier associated with a user according to claim 1, **characterized in that**
- the individual stored transaction records contain the transaction amount of the transaction;
- method steps b) to d) are performed for all stored transactions, and
- the current amount of money is determined by setting off the transaction amounts contained in the selected transaction records against the original amount of money loaded into the data carrier.

3. A method for determining the current amount of money in a data carrier associated with a user according to claim 1, **characterized in that**
- the individual stored transaction records contain the current amount of money after the transaction last performed with a data carrier;
- method steps b) to d) are performed, starting out from the last stored transaction, until a match of certificates results;
- the current amount of money is determined from the transaction record where a match of certificates has resulted.

4. A method for determining the current amount of money in a data carrier associated with a user according to any of claims 1 to 3, **characterized in that**
- the stored transaction records are associated with groups according to certain criteria, the criterion being contained in the transaction records and each data carrier belonging to a certain group, and
- only transactions of the group to which the data carrier belongs are checked upon determination of the current amount of money of a certain data carrier.

5. A method for determining the current amount of money in a data carrier associated with a user according to claim 4, **characterized in that** each stored transaction record contains a number, for example a bank code number, a plurality of data carriers being associated with a number and the transaction records being associated with the groups according to the number.

6. A system for carrying out the method according to claim 1, comprising a center device (3), at least one terminal (5) that can communicate with the center device, and data carriers (7) associated with the users and each storing a certain amount of money, **characterized in that** a device (1) is provided having
- a transaction memory (11) storing transaction records with a certificate belonging to each transaction record and produced from the transaction data with a user-specific key in the course of the transaction;
- a key memory (9) storing data that permit determination of the user-specific keys of the card holders;
- means (13) for calculating the certificates with a user-specific key from the key memory, at least of the transactions permitting determination of the current amount of money of the data carrier associated with the key.

7. A system according to claim 6, **characterized in that** the device further contains an amount memory (15) storing the amounts of money originally written into the data carriers, in conjunction with the user identity.

8. A system according to claim 6, **characterized in that** the device (1) is part of the center device (3).

9. A system according to claim 6, **characterized in that** the data carrier (7) is an IC card having a memory for storing the card-specific key and a circuit for calculating the transaction certificate.

## Revendications

1. Procédé de détermination de la somme d'argent actuelle dans un support de données (7) affecté à un utilisateur qui est utilisé dans un système pour réaliser des transactions par virement, **caractérisé par** les étapes suivantes consistant à :
a) mémoriser un enregistrement de transaction avec un certificat associé qui a été généré au cours d'une transaction avec une clé affectée à l'un des supports de données avec lequel la transaction a été effectuée pour des transactions effectuées dans le système ;
b) calculer un certificat à partir d'un enregistrement de transaction mémorisé avec la clé qui est affectée à l'enregistrement dont la somme d'argent actuelle doit être déterminée ;
c) comparer le certificat calculé au certificat mémorisé, une coïncidence des certificats indiquant que les transactions ont été effectuées avec le support de données dont la somme d'argent actuelle doit être déterminé ;
d) sélectionner l'enregistrement de transaction pour lequel une coïncidence des certificats a été établie ;
e) répéter les étapes b) à d) jusqu'à ce que parmi les enregistrements de transaction ceux des enregistrements ont été sélectionnés qui permettent une détermination de la somme d'argent actuelle dans le support de données.

2. Procédé de détermination de la somme d'argent actuelle dans un support de données affecté à un utilisateur selon la revendication 1, **caractérisé en ce que** :
- les enregistrements de transaction mémorisés individuels contiennent la somme d'argent transactionnelle de la transaction ;
- les étapes b) à d) sont effectuées pour toutes les transactions mémorisées ; et **en ce que** :
- la somme d'argent actuelle est déterminée en compensant les sommes d'argent transactionnelles contenues dans les enregistrements de transaction sélectionnés par la somme d'argent initiale chargée dans le support de données.

3. Procédé de détermination de la somme d'argent actuelle dans un support de données affecté à un utilisateur selon la revendication 1, **caractérisé en ce que** :
- les enregistrements de transaction mémorisés individuels contiennent la somme d'argent actuelle après la transaction effectuée en dernier avec un support de données ;
- en partant de la transaction mémorisée en dernier, les étapes b) à d) sont exécutées jusqu'à ce qu'une coïncidence des certificats soit établie ;
- la somme d'argent actuelle est déterminée à partir de l'enregistrement de transaction pour lequel une coïncidence des certificats a été établie.

4. Procédé de détermination de la somme d'argent actuelle dans un support de données à un utilisateur, selon l'une quelconque des revendications 1 à 3, **caractérisé en ce que** :
- les enregistrements de transaction mémorisés sont affectés à des groupes selon certains critères, le critère étant contenu dans les enregistrements de transaction et chaque support de données appartenant à un certain groupe ; et
- lors de la détermination de la somme d'argent actuelle d'un certain support de données, seules sont, vérifiées les transactions du groupe auquel appartient le support de données.

5. Procédé de détermination de la somme d'argent actuelle dans un support de données affecté à un utilisateur selon la revendication 4, **caractérisé en ce que** chaque enregistrement de transaction mémorisé contient un numéro, par exemple un numéro d'identité bancaire, plusieurs supports de données étant respectivement affectés à un numéro et les enregistrements de transaction étant affectés aux groupes en fonction du numéro.

6. Système de mise en oeuvre du procédé selon la revendication 1, comprenant un centre (3), au moins un terminal (5) pouvant communiquer avec le centre, et des supports de données (7) affectés aux utilisateurs, dans lesquels une somme d'argent est mémorisée respectivement , **caractérisé en ce qu'**un dispositif (1) est prévu, comprenant :
- une mémoire de transaction (11) dans laquelle sont mémorisés des enregistrements de transaction avec respectivement un certificat associé aux enregistrements de transaction, le certificat ayant été généré au cours de la transaction avec une clé spécifique à l'utilisateur à partir des données de la transaction ;
- une mémoire de clés (9) dans laquelle sont mémorisées des données qui permettent la détermination des clés spécifiques à l'utilisateur des propriétaires de carte ;
- des moyens (13) pour calculer les certificats avec une clé spécifique à l'utilisateur à partir de la mémoire de clés, au moins des transactions qui permettent une détermination de la somme d'argent actuelle du support de données affecté à la clé.

7. Système selon la revendication 6, **caractérisé en ce que** le dispositif contient en outre une mémoire de sommes (15) dans laquelle sont mémorisées les sommes d'argent initialement inscrites dans les supports de données en liaison avec l'identité de l'utilisateur.

8. Système selon la revendication 6, **caractérisé en ce que** le dispositif (1) fait partie du centre (3).

9. Système selon la revendication 6, **caractérisé en ce que** le support de données (7) est une carte à puce ou à CI qui présente une mémoire pour mémoriser la clé individuelle de la carte et un circuit pour calculer le certificat de transaction.
